(19) Europäisches Patentamt
European Patent Office
Office européen des brevets

(11) **EP 3 892 434 A1**

(12) **EUROPEAN PATENT APPLICATION**
published in accordance with Art. 153(4) EPC

(43) Date of publication:
**13.10.2021 Bulletin 2021/41**

(21) Application number: **19893910.0**

(22) Date of filing: **04.12.2019**

(51) Int Cl.:
**B29B 17/00** (2006.01)　　**C08K 7/02** (2006.01)
**C08L 101/00** (2006.01)

(86) International application number:
**PCT/JP2019/047437**

(87) International publication number:
**WO 2020/116518 (11.06.2020 Gazette 2020/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.12.2018　JP 2018228579**

(71) Applicant: **FURUKAWA ELECTRIC CO., LTD.**
**Chiyoda-ku**
**Tokyo 100-8322 (JP)**

(72) Inventors:
• **HARA, Hidekazu**
**Tokyo 100-8322 (JP)**

• **KIM, Jae Kyung**
**Tokyo 100-8322 (JP)**
• **HIROISHI, Jirou**
**Tokyo 100-8322 (JP)**
• **TAZUKE, Masami**
**Tokyo 100-8322 (JP)**
• **SUZUKI, Toshihiro**
**Tokyo 100-8322 (JP)**
• **IKEUCHI, Masato**
**Tokyo 100-8322 (JP)**
• **SAKATO, Jiro**
**Tokyo 100-8322 (JP)**

(74) Representative: **Forstmeyer, Dietmar et al**
**BOETERS & LIECK**
**Oberanger 32**
**80331 München (DE)**

(54) **CELLULOSE FIBER-DISPERSING RESIN COMPOSITE MATERIAL, FORMED BODY, AND COMPOSITE MEMBER**

(57)　A cellulose fiber-dispersing resin composite material, containing a cellulose fiber dispersed in a resin, wherein the cellulose fiber-dispersing resin composite material contains aggregates of the cellulose fiber, and at least a part of the aggregates is an aggregate having an area of $2.0 \times 10^4$ to $1.0 \times 10^6$ $\mu m^2$ in a plan view; a formed body using this composite material; and a composite member using this formed body.

*Fig. 1*

EP 3 892 434 A1

**Description**

TECHNICAL FIELD

The present invention relates to a cellulose fiber-dispersing resin composite material, a formed body, and a composite member.

BACKGROUND ART

In order to improve mechanical properties of resin products, fiber-reinforced resins formed by blending reinforcing fibers such as glass fiber, carbon fiber, and cellulose fiber in a resin have been known.

When glass fiber is used as the reinforcing fiber, the glass fiber, which is an incombustible inorganic substance, remains in a large amount as ash even when being burnt by thermal recycling or the like, and thus has a problem in energy recovery rate in recycling. Further, the specific gravity of the glass fiber is larger than that of resin, and thus there is also a problem that the weight of the fiber-reinforced resin increases. Moreover, the glass fiber has a larger heat capacity than that of the resin, and thus requires time for solidifying and cooling after being formed, which restricts improvement in the production efficiency of a resin product.

Meanwhile, using carbon fiber as the reinforcing fiber in place of the glass fiber can solve the above problems. However, the carbon fiber is expensive, and thus there is a problem that use of the carbon fiber as the reinforcing fiber increases the cost of resin products.

On the other hand, a cellulose fiber, which is light weight and leaves less combustion residues in thermal recycling or the like, and is also relatively inexpensive, is advantageous in reduction in weight, recycling property, cost and the like. Techniques related to fiber-reinforced resins using a cellulose fiber have been reported. For example, Patent Literature 1 discloses a method of producing a plant fiber-containing resin composition in which a fiber raw material of plant fiber which has been sufficiently micronized is dispersed in a resin composition, and coarse plant fiber aggregates are not present. In this production method, a composite is formed while a thermoplastic resin, a plant fiber composition containing a plant fiber having a specific shape, and a plant fiber modifier are melt-kneaded.

Further, Patent Literature 2 discloses a method of producing a fiber-containing resin composition that can suppress coloring by heat, can improve the dispersibility of fine cellulose fiber in a polyolefin-based resin, and has excellent mechanical properties. In this production method, a fine cellulose fiber, water, a polar group-containing polyolefin-based resin having a reactive functional group, a low molecular weight compound having a hydrophobic group and a hydrophilic group, a polyolefin-based resin not having a reactive functional group and a hydrophilic group are heated and kneaded at 100°C or more, and then subjected to devolatilization.

Further, Patent Literature 3 describes that a cellulose-reinforced thermoplastic resin which is a composite resin in which a micronized plant fiber is uniformly dispersed in a thermoplastic resin is obtained by kneading a thermoplastic synthetic resin, cellulose, and an ionic compound at a specific amount ratio. In the examples of Patent Literature 3, there is described that the area of a cellulose aggregate in a thermoplastic resin can be minimized to 19,121 $\mu m^2$ or less.

Further, Patent Literature 4 describes that a cellulose-reinforced thermoplastic resin which is a composite resin in which a micronized plant fiber is uniformly dispersed in a thermoplastic resin is obtained by kneading a thermoplastic synthetic resin, cellulose, and water at a specific amount ratio. Patent Literature 4 describes that the area of the cellulose aggregate in the thermoplastic resin is less than 20,000 $\mu m^2$. Further, in the examples of Patent Literature 4, there is described that the area of the cellulose aggregate can be minimized to 18,814 $\mu m^2$ or less by kneading a polyolefin resin, a powder cellulose, and water by a twin screw extruder.

CITATION LIST

PATENT LITERATURES

Patent Literature 1: JP-A-2014-193959 ("JP-A" means unexamined published Japanese patent application)
Patent Literature 2: JP-A-2015-209439
Patent Literature 3: WO 2017/170745
Patent Literature 4: WO 2018/180469

SUMMARY OF INVENTION

TECHNICAL PROBLEM

However, the fiber-reinforced resin formed by using a cellulose fiber as a reinforcing fiber does not necessarily exhibit sufficient mechanical properties, and in particular, further improvement in impact characteristics has been desired.
The present invention provides a resin composite material in which a cellulose fiber is dispersed in a resin and exhibit excellent impact resistance characteristics. The present invention also provides a formed body using the composite material, and a composite member using this formed body.

SOLUTION TO PROBLEM

The above problems of the present invention have been solved by the following means.

[1] A cellulose fiber-dispersing resin composite material, containing a cellulose fiber dispersed in a resin,

> wherein the cellulose fiber-dispersing resin composite material contains aggregates of the cellulose fiber; and
> wherein at least a part of the aggregates is an aggregate having an area of $2.0 \times 10^4$ to $1.0 \times 10^6$ $\mu m^2$ in a plan view.

[2] The cellulose fiber-dispersing resin composite material described in the above item [1], wherein at least a part of the aggregates of the cellulose fiber contained in the cellulose fiber-dispersing resin composite material is an aggregate having an area of $2.0 \times 10^4$ to $2.0 \times 10^5$ $\mu m^2$ in a plan view.
[3] The cellulose fiber-dispersing resin composite material described in the above item [2], wherein at least a part of the aggregates of the cellulose fiber contained in the cellulose fiber-dispersing resin composite material is an aggregate having an area of $3.0 \times 10^4$ to $1.3 \times 10^5$ $\mu m^2$ in a plan view.
[4] The cellulose fiber-dispersing resin composite material described in any one of the above items [1] to [3], wherein the aggregates of the cellulose fiber contained in the cellulose fiber-dispersing resin composite material are aggregates having an area of less than $1.0 \times 10^7$ $\mu m^2$ in a plan view.
[5] The cellulose fiber-dispersing resin composite material described in any one of the above items [1] to [4], wherein a content of the cellulose fiber in the cellulose fiber-dispersing resin composite material determined by the following measurement method is 1% by mass or more and less than 70% by mass.

<Measurement method>

A sample of the cellulose fiber-dispersing resin composite material is subjected to a thermogravimetric analysis (TGA) under a nitrogen atmosphere at a heating rate of +10°C/min, and the content of the cellulose fiber is calculated by the following [Formula 1].

[Formula 1] (content of cellulose fiber [% by mass]) = (amount of mass reduction of sample at 200 to 380°C [mg]) × 100/(mass of sample before thermogravimetric analysis [mg])

[6] The cellulose fiber-dispersing resin composite material described in the above item [5], wherein the content of the cellulose fiber in the cellulose fiber-dispersing resin composite material is 5% by mass or more and less than 50% by mass.
[7] The cellulose fiber-dispersing resin composite material described in any one of the above items [1] to [6], containing a cellulose fiber having a fiber length of 0.3 mm or more.
[8] The cellulose fiber-dispersing resin composite material described in the above item [7], containing a cellulose fiber having a fiber length of 1 mm or more.
[9] The cellulose fiber-dispersing resin composite material described in any one of the above items [1] to [8], wherein a length weighted average fiber length of the cellulose fiber is 0.3 mm or more.
[10] The cellulose fiber-dispersing resin composite material described in any one of the above items [1] to [9], wherein, in the aggregates of the cellulose fiber contained in the cellulose fiber-dispersing resin composite material, a proportion of a sum of an area of aggregates having an area of $3.0 \times 10^4$ to $1.3 \times 10^5$ $\mu m^2$ in a plan view in a sum of an area of aggregates having an area of $1.0 \times 10^3$ to $1.0 \times 10^6$ $\mu$m$^2$ is 10 to 95%.

[11] The cellulose fiber-dispersing resin composite material described in any one of the above items [1] to [10], wherein, in the aggregates of the cellulose fiber contained in the cellulose fiber-dispersing resin composite material, a proportion of a sum of an area of aggregates having an area of $3.0 \times 10^4$ to $1.3 \times 10^5$ $\mu$m$^2$ in a plan view in a sum of an area of aggregates having an area of $1.0 \times 10^3$ to $1.0 \times 10^6$ $\mu$m$^2$ is 40 to 80%.

[12] The cellulose fiber-dispersing resin composite material described in any one of the above items [1] to [11], wherein the resin contains one type or two or more types of polyolefin resin, acrylonitrile-butadiene-styrene copolymer resin, acrylonitrile-styrene copolymer resin, polyamide resin, polyvinyl chloride resin, polyethylene terephthalate resin, polybutylene terephthalate resin, polystyrene resin, 3-hydroxybutyrate-co-3-hydroxyhexanoate polymer resin, polybutylene succinate resin, and polylactic acid resin.

[13] The cellulose fiber-dispersing resin composite material described in any one of the above items [1] to [12], wherein the resin contains a polyolefin resin.

[14] The cellulose fiber-dispersing resin composite material described in any one of the above items [1] to [13], containing aluminum dispersed in the resin.

[15] The cellulose fiber-dispersing resin composite material described in any one of the above items [1] to [14], containing at least one type of compound of a metal salt of organic acid, organic acid, and silicone.

[16] The cellulose fiber-dispersing resin composite material described in any one of the above items [1] to [15], wherein at least a part of the resin and/or at least a part of the cellulose fiber is derived from a recycled material.

[17] A formed body, which is obtainable by using the cellulose fiber-dispersing resin composite material described in any one of the above items [1] to [16].

[18] The formed body described in the above item [17], which is a tubular body or a divided body formed by dividing a tubular body.

[19] A composite member, which is obtainable by combining the formed body described in the above item [17] or [18], and another material.

In the present invention, the numerical range expressed by using the expression "to" means a range including numerical values before and after the expression "to" as the lower limit and the upper limit.

ADVANTAGEOUS EFFECTS OF INVENTION

The cellulose fiber-dispersing resin composite material, the formed body, and the composite member of the present invention are excellent in impact resistance characteristics.

BRIEF DESCRIPTION OF THE DRAWINGS

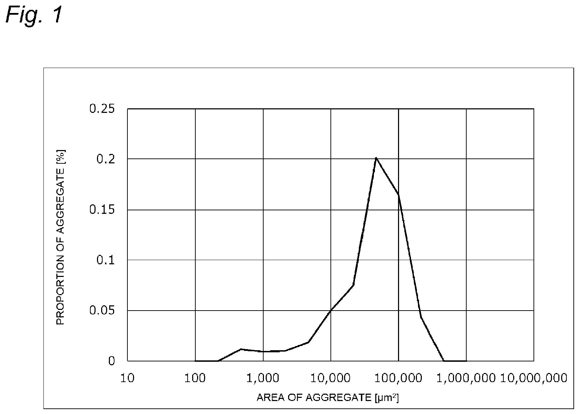

{Fig. 1}
Fig. 1 is a graph showing the area distribution of the aggregates of the cellulose fiber contained in the composite material in an embodiment of the composite material of the present invention.

DESCRIPTION OF EMBODIMENTS

Preferable embodiments of the present invention will be described.

[Cellulose fiber-dispersing resin composite material]

In the cellulose fiber-dispersing resin composite material of the present invention (hereinafter, also simply referred to as "composite material of the present invention"), a cellulose fiber is dispersed in a resin, aggregates of the cellulose fiber are contained in the composite material, and at least a part of these aggregates are each an aggregate having an area of $2.0 \times 10^4$ to $1.0 \times 10^6$ $\mu$m$^2$ in a plan view. With such a configuration, the composite material of the present invention can exhibit excellent impact resistance characteristics (impact strength). The composite material of the present invention can be in the form of containing inorganic substances such as aluminum, various types of additives and the like according to the type of raw material to be used.

The composite material of the present invention contains aggregates of a cellulose fiber as described above. At least a part of these individual aggregates has an area of $2.0 \times 10^4$ to $1.0 \times 10^6$ $\mu$m$^2$ in a plan view. A composite material having excellent impact resistance characteristics compared to a composite material in the form of simply containing a cellulose fiber can be obtained by employing the form of containing such aggregates. From this point of view, in the composite material of the present invention, at least a part of aggregates of the cellulose fiber is preferably an aggregate having an area of $2.0 \times 10^4$ to $2.0 \times 10^5$ $\mu$m$^2$ in a plan view, more preferably an aggregate having an area of $3.0 \times 10^4$ to $1.3 \times 10^5$ $\mu m^2$ in a plan view, and even more preferably an aggregate having an area of $5.0 \times 10^4$ to $1.0 \times 10^5 \mu m^2$ in a plan view.

In the present invention, when the size such as "area" and "major axis diameter" of an aggregate is simply described, the size refers to the size of an individual aggregate. Further, in the present specification, the expression "area in a plan view" or simply "area" of the aggregate means an area when a composite material is viewed in a plan from one direction. The same applies to the "major axis diameter". A specific measurement method will be described later.

In the present invention, the aggregate of the cellulose fiber is usually an aggregate formed from entangled cellulose fibers, but, a component derived from a raw material may be mixed in a part of the aggregate depending on a raw material to be used. When aggregates are dispersed in the composite material, the aggregates are present scattered in the composite material, and thus are observed as a scattered material. When the content of the cellulose fiber in the composite material is large, overlapping cellulose fibers increase, and thus discrimination of aggregates of the cellulose fiber is not clear in some cases. In such a case, the aggregates of the cellulose fiber can be allowed to stand out by diluting the composite material with a resin of the same series (type) as a resin constituting the composite material, whereby the aggregates can be clearly observed. Ordinarily, the composite material is formed into a sheet form, and the aggregates of the cellulose fiber can be observed as a dark color portion of transmitted light. Further, when the resin portion of the composite material is a dark color due to influence of a colorant, coloring components and the like represented by, for example, carbon black, the aggregates of the cellulose fiber can be observed as a light color portion of reflected light.

More specifically, the area of the aggregate of the cellulose fiber contained in the composite material of the present invention can be determined by forming a composite material into a thin film sheet (for example, thickness: 0.1 mm), taking a microscopic image of this sheet with reflected light or transmitted light, and analyzing this image. When the cellulose fiber amount in the composite material is large, overlapping of cellulose fibers dispersed in the resin is significant as it is. Therefore, a case is assumed where it is not easy to observe the aggregates while discriminating between overlapping cellulose fibers and aggregates. Even in such a case, the area of the aggregate can be more reliably determined by mixing a composite material with a resin having compatibility with a resin constituting the composite material (preferably, a resin of the same type as the resin constituting the composite material) and kneading them to dilute the composite material, then forming the diluted material into a thin film sheet (for example, thickness: 0.1 mm), observing this sheet with a microscope and taking a microscopic image of the sheet.

The above thin film sheet can be prepared by slicing or pressing the composite material. Incidentally, the presence of a large aggregate having an area of $1.0 \times 10^7$ $\mu m^2$ or more can be determined by observing the surface of the composite material without forming a thin film sheet or diluting a composite material.

In at least a part of aggregates of the cellulose fiber contained in the composite material of the present invention, the major axis diameter is preferably $1.6 \times 10^2$ to $1.0 \times 10^3$ $\mu m$. The major axis diameter means the maximum diameter in a plan view shape observed in an individual aggregate. That is, the maximum distance from a given point to another point on the circumference of the aggregate in an image observed with a microscope as described above is defined as the major axis diameter. The impact characteristics of the composite material can be further improved by a composite material in the form of containing such aggregates. From this point of view, at least a part of aggregates of the cellulose fiber in the composite material of the present invention is more preferably an aggregate having a major axis diameter of $1.6 \times 10^2$ to $5.0 \times 10^2$ $\mu m$, and even more preferably an aggregate having a major axis diameter of $2.0 \times 10^2$ to $4.0 \times 10^2$ $\mu m$.

The composite material of the present invention is excellent in impact resistance characteristics. Accordingly, the composite material of the present invention is suitable as a material constituting a formed article (resin product) which requires impact strength. The reason why the composite material of the present invention is excellent in impact strength is not clear. However, it is presumed that, when at least a part of the cellulose fiber is present as an aggregate of the cellulose fiber having a specific size, a reinforcing action of the cellulose fiber on rapid deformation, an action of the aggregate in the cellulose fiber absorbing and mitigating impact, and the like work in combination, thus effectively improving impact strength.

The composite material of the present invention contains aggregates of a cellulose fiber having a specific range of area as described above, and the area of the aggregate of the cellulose fiber contained in the composite material of the present invention is preferably less than $1.0 \times 10^7$ $\mu m^2$. The forming processability of the composite material can be further improved by adjusting the area of the aggregate to less than $1.0 \times 10^7$ $\mu m^2$. From the viewpoint of forming processability, the area of the aggregate of the cellulose fiber contained in the composite material of the present invention is more preferably less than $3.0 \times 10^6$ $\mu m^2$. On the other hand, the aggregate having an area of $2.0 \times 10^4$ to $1.0 \times 10^6$ $\mu m^2$, which is an essential component of the composite material of the present invention, is considered to contribute to improvement in impact resistance characteristics as described above and also provide an effect on improvement of flowability in a certain level.

In the aggregates of the cellulose fiber contained in the composite material of the present invention, the proportion of the sum of the areas of aggregates having an area of $3.0 \times 10^4$ to $1.3 \times 10^5$ $\mu m^2$ (sum of the areas of individual aggregates in a range of $3.0 \times 10^4$ to $1.3 \times 10^5$ $\mu m^2$) in the sum of the areas of aggregates having an area of $1.0 \times 10^3$ to $1.0 \times 10^6$ $\mu m^2$ (sum of the areas of individual aggregates in a range of $1.0 \times 10^3$ to $1.0 \times 10^6$ $\mu m^2$) is preferably 10 to 95%. Impact resistance characteristics can be further improved, and the balance between impact resistance characteristics and flowability can also be further improved by adjusting this proportion to 10% or more. From this point of view, the above proportion is more preferably 20% or more, and even more preferably 40% or more. Note that it is technically difficult to increase the above proportion to a higher level. In consideration of this respect, the above proportion is actually 90% or less, and ordinarily 80% or less. The above proportion is particularly preferably 40 to 80%.

In the composite material of the present invention, the content of the cellulose fiber in the composite material (100% by mass) is preferably 1% by mass or more. Mechanical characteristics can be improved by adjusting the content of the cellulose fiber in the composite material to 1% by mass or more. From this point of view, the content of the cellulose fiber in the composite material is more preferably 3% by mass or more, even more preferably 5% by mass or more, and even more preferably 10% by mass or more. Also, in consideration of further improving the flexural strength, the content of the cellulose fiber in the composite material is preferably 25% by mass or more.

In the composite material of the present invention, the content of the cellulose fiber is preferably less than 70% by mass. A composite material in which the cellulose fiber is uniformly dispersed by melt-kneading can be easily obtained by adjusting the content of the cellulose fiber in the composite material to less than 70% by mass. From the viewpoint of further suppressing water absorbing properties, the content of the cellulose fiber in the composite material is preferably less than 50% by mass, and also preferably less than 40% by mass.

In the composite material of the present invention, the content of the cellulose fiber is preferably 5% by mass or more and less than 50% by mass, and also preferably 15% by mass or more and less than 40% by mass.

The content of the cellulose fiber contained in the composite material of the present invention (% by mass) is determined by employing a value obtained by a thermogravimetric analysis as follows.

<Method of determining content of cellulose fiber (cellulose effective mass ratio)>

A composite material sample (10 mg) which has been dried in advance under the atmosphere at 80°C for 1 hour is subjected to a thermogravimetric analysis (TGA) from 23°C to 400°C under a nitrogen atmosphere at a heating rate of +10°C/min. Then, the content of cellulose fiber (% by mass, also referred to as cellulose effective mass ratio) is calculated by the following [Formula 1].

[Formula 1] (content of cellulose fiber [% by mass]) = (amount of mass reduction of composite material sample at 200 to 380°C [mg]) × 100/(mass of composite material sample in dried state before thermogravimetric analysis [mg])

Incidentally, when the temperature is raised to 200 to 380°C under a nitrogen atmosphere at a heating rate of +10°C/min, almost all of the cellulose fiber is thermally decomposed and lost. In the present invention, the % by mass calculated by the above [Formula 1] is taken as the content of the cellulose fiber contained in the composite material. Incidentally, a part of the cellulose fiber is not lost and remains within this temperature range (in some cases), but when the temperature exceeds this temperature range, the cellulose fiber content cannot be distinguished from thermolysis loss or remaining components in a case where resin components are lost or compounds degradable at high temperatures are present together, for example, and as a result, it becomes difficult to measure the cellulose fiber amount. For this reason, the % by mass calculated by the [Formula 1] is used for determining the cellulose fiber amount in the present invention. The cellulose fiber amount thus determined and the mechanical properties of the composite material are highly related.

In the present invention, in the observation of the aggregates, the aggregates are easy to be observed in some cases by, for example, diluting the composite material such that the concentration of the cellulose fiber is in a certain range. When the concentration of the cellulose fiber is adjusted to 3 to 7% by diluting the composite material, the proportion s1 of the sum of the areas of the aggregates having an area of $3.0 \times 10^4$ to $1.3 \times 10^5$ $\mu m^2$ in the observation area in the observation in a plan view is preferably 0.01 to 1.0%. In this case, s1 is more preferably 0.015 to 0.8%, even more preferably 0.015 to 0.7%, and also preferably 0.018 to 0.6%. This observation area and the proportion of the sum of the areas of the aggregates having an area of $3.0 \times 10^4$ to $1.3 \times 10^5$ $\mu m^2$ in the observation area are determined by the method in examples described later (measurement method of s1).

The sum of the areas of the aggregates in the observation area varies depending on dilution of the composite material. For example, in the actual observation, a value sr1 (5% converted value) determined by converting a proportion s1' of the sum of the areas of the aggregates having an area of $3.0 \times 10^4$ to $1.3 \times 10^5$ $\mu m^2$ in the observation area into the observation result of a sample (thin film sheet) obtained by diluting the composite material so that the content of the cellulose fiber is 5% can be calculated by the following formula.

$$sr1\ [\%] = s1'\ [\%] \times 5\ [\%\ by\ mass]/(content\ of\ sample\ cellulose\ fiber\ to\ be$$

$$observed\ [\%\ by\ mass])$$

The above sr1 is preferably 0.01 to 1.0%, more preferably 0.015 to 0.8%, even more preferably 0.015 to 0.7%, and also preferably 0.018 to 0.6%.

When the concentration of the cellulose fiber is adjusted to 3 to 7% by diluting the composite material of the present invention, a proportion s2 of the sum of the areas of the aggregates having an area of $1.0 \times 10^3$ to $1.0 \times 10^6$ $\mu m^2$ in the observation area in the observation in a plan view is preferably 0.015 to 1.5%, more preferably 0.02 to 1.2%, even more preferably 0.02 to 1.0%, and also preferably 0.03 to 1.0%. This observation area and the proportion of the sum of the areas of the aggregates having an area of $1.0 \times 10^3$ to $1.0 \times 10^6$ $\mu m^2$ in the observation area are determined by the method in examples described later (measurement method of s2).

For example, in the actual observation, a value sr2 (5% converted value) determined by converting a proportion s2' of the sum of the areas of the aggregates having an area of $1.0 \times 10^3$ to $1.0 \times 10^6$ $\mu m^2$ in the observation area into the observation result of a sample (thin film sheet) obtained by diluting the composite material so that the content of the cellulose fiber is 5% can be calculated by the following formula.

$$sr2\ [\%] = s2'\ [\%] \times 5\ [\%\ by\ mass]/(content\ of\ sample\ cellulose\ fiber\ to\ be$$

$$observed\ [\%\ by\ mass])$$

The above sr2 is preferably 0.015 to 1.5%, more preferably 0.02 to 1.2%, even more preferably 0.02 to 1.0%, and also preferably 0.03 to 1.0%.

The cellulose fiber dispersed in the composite material of the present invention preferably contains a cellulose fiber having a fiber length of 0.3 mm or more. Mechanical strength such as impact resistance characteristics can be further improved by containing the cellulose fiber having a fiber length of 0.3 mm or more. From this point of view, it is more preferable to contain a cellulose fiber having a fiber length of 1 mm or more.

Further, in the composite material of the present invention, the length weighted average fiber length of the cellulose fiber is preferably 0.3 mm or more. Mechanical strength such as impact resistance characteristics can be further improved by adjusting the length weighted average fiber length to 0.3 mm or more. Here, the length weighted average fiber length is determined for a dissolution residue (insoluble component) of the composite material when the composite material is immersed in a solvent capable of dissolving resin components in accordance with Pulps-Determination of fiber length by automated optical analysis specified by ISO 16065 2001 (JIS P8226 2006). When the resin constituting the composite material is a polyolefin resin, the length weighted average fiber length can be determined for a dissolution residue (insoluble component) in hot xylene (130 to 150°C) by the above measurement method. The length weighted average fiber length is a value obtained by dividing the sum of the squares of the fiber lengths of respective measured fibers by the total of the fiber lengths of respective measured fibers. As the characteristics of this average, the influence of the fiber length of the fiber having a longer fiber length, and the influence of the probability density of the fiber having a longer fiber length than the number average fiber length are remarkable compared to the number average fiber length which is a simple average of the fiber lengths. For this reason, the length weighted average fiber length is more suitable for evaluating the influence of the composite material containing a fiber having a long fiber length contained in the composite material on the mechanical properties than the number average fiber length.

The resin constituting the composite material of the present invention includes various types of thermoplastic resins and thermosetting resins, and preferably contains a thermoplastic resin in view of formability. Specific examples thereof include polyolefin resins such as polyethylene resin and polypropylene resin; thermoplastic resins such as polyvinyl chloride resin, acrylonitrile-butadiene-styrene copolymer resin (ABS resin), acrylonitrile-styrene copolymer resin (AS resin), polyamide resin (nylon), polyethylene terephthalate resin, polybutylene terephthalate resin, and polystyrene resin; and thermoplastic biodegradable resins such as 3-hydroxybutyrate-co-3-hydroxyhexanoate polymer resin (PHBH), polybutylene succinate resin, and polylactic acid resin. One type or two or more types of these resins can be used for the composite material of the present invention. Among them, the resin of the composite material preferably contains a polyolefin resin, and 50% by mass or more (preferably, 70% by mass or more) of the resin constituting the composite material is preferably a polyolefin resin.

The polyolefin resin is preferably a polyethylene resin or a polypropylene resin, or preferably a mixture of a polyethylene resin and a polypropylene resin (resin blend). Further, ethylene-based copolymers such as an ethylene-vinyl acetate copolymer, an ethylene-ethyl acrylate copolymer, an ethylene-methyl methacrylate copolymer, an ethylene-acrylic acid copolymer, an ethylenemethacrylic acid copolymer, an ethylene-glycidyl methacrylate copolymer, and an ethylene-propylene copolymer (copolymers containing ethylene as a constituent); and resins such as polybutene are preferable as the polyolefin resin used in the composite material of the present invention. One type of polyolefin resin may be used singly, or two or more types thereof may be used in combination. The polyolefin resin constituting the composite material of the present invention is preferably a polyethylene resin and/or a polypropylene resin, and more preferably a polyethylene resin.

Examples of the above polyethylene include low density polyethylenes (LDPE) and high density polyethylenes (HDPE). The resin constituting the composite material of the present invention is preferably a polyolefin resin. This polyolefin is preferably a polyethylene, and particularly preferably a low density polyethylene.

The composite material of the present invention may contain a plurality of types of resins as described above. Further, for example, a polyolefin resin and polyethylene terephthalate and/or nylon may be used in combination. In this case, the total amount of the polyethylene terephthalate and/or nylon is preferably 10 parts by mass or less based on 100 parts by mass of the polyolefin resin.

The above low density polyethylene means a polyethylene having a density of 880 kg/m$^3$ or more and less than 940 kg/m$^3$. The above high density polyethylene means a polyethylene having a density larger than the density of the above low density polyethylene.

The low density polyethylene may be so-called "low density polyethylene" and "ultralow density polyethylene" each having long chain branching, or linear low density polyethylene (LLDPE) in which ethylene and a small amount of $\alpha$-olefin monomer are copolymerized, or further may be "ethylene-$\alpha$-olefin copolymer elastomer" involved in the above density range.

The content of the resin in the composite material of the present invention is preferably 30% by mass or more, preferably 40% by mass or more, and more preferably 50% by mass or more. Further, the content of the resin in the composite material of the present invention is ordinarily less than 99% by mass, more preferably less than 95% by mass, even more preferably less than 90% by mass, and also preferably less than 85% by mass.

Incidentally, when the total content of the cellulose fiber and resin in the composite material is less than 100% by mass, the remainder can contain, for example, components described later as appropriate according to the purpose or raw materials to be used.

The composite material of the present invention is preferably in the form in which aluminum is dispersed in the resin, in addition to the cellulose fiber. The thermal conductivity, visibility, light shielding property, and lubricity of the composite material are improved by containing aluminum. When aluminum is dispersed in the resin of the composite material of the present invention, the content of the aluminum is preferably 1% by mass or more and 30% by mass or less in the composite material. The processability of the composite material can be further improved by adjusting the content of the aluminum to a level within this range, and a lump of aluminum becomes harder to be formed during processing of the composite material. This aluminum can be derived from an aluminum thin film layer of polyethylene laminated paper as a raw material. In the aluminum thin film layer of the polyethylene laminated paper, aluminum is not melted during melt-kneading, but is gradually sheared and micronized by shear force during kneading.

When thermal conductivity, flame retardancy, and the like are considered in addition to the viewpoint of the processability, the content of the aluminum in the composite material of the present invention is preferably 5% by mass or more and 20% by mass or less.

In the aluminum dispersed in the composite material of the present invention, the average of the X-Y maximum length of individual aluminum is preferably 0.02 to 2 mm, and more preferably 0.04 to 1 mm. The average of the X-Y maximum length is taken as the average of the X-Y maximum lengths measured by using the image analysis software as described later.

When the composite material contains aluminum, this aluminum preferably contains an aluminum dispersoid having an X-Y maximum length of 0.005 mm or more. The proportion of the number of aluminum dispersoids having an X-Y maximum length of 1 mm or more in the number of aluminum dispersoids having an X-Y maximum length of 0.005 mm or more is preferably less than 1%. The processability of the composite material can be further improved by adjusting this proportion to a level less than 1%, the lump of aluminum becomes harder to be formed during processing of the composite material.

Further, lubricity can be improved by containing aluminum, and for example, even when formed sheets of the composite material obtained by forming the composite material are placed in a state of being stacked, the formed sheets are hard to be closely adhered to each other, and thus are easy to be peeled. From the viewpoint of effectively exhibiting such effects of aluminum, aluminum in the composite material preferably has a scale-like structure, and further at least a part of aluminum preferably has a scale-like bent structure.

Further, lubricity at normal temperature between formed bodies of the composite material is improved by containing aluminum, whereas adhesiveness at the time of thermally fusing property the composite material to metal is improved. When the composite material containing aluminum is thermally fused to an aluminum foil, the composite material can exhibit a peel strength of, for example, 1.0 N/10 mm or more between the aluminum foil. This peel strength is the average of peel strengths observed when a sheet of a composite material and an aluminum foil having a thickness of 0.1 mm are thermally fused at 170°C for 5 minutes at 1 kg/cm$^2$ by heat pressing, the obtained material is cut out into a strip having a width of 25 mm, and then the aluminum foil is peeled off at 23°C in a direction at 90° at a rate of 50 mm/min.

The composite material of the present invention can be in the form in which resin particles different from the polyolefin resin are further dispersed in the polyolefin resin. A composite material having further improved mechanical strength can be obtained by taking the form in which resin particles different from the polyolefin resin are dispersed. In the resin particle, the maximum diameter is preferably 10 μm or more, and more preferably 50 μm or more. It is also preferable that the maximum diameter is 10 μm or more, and the aspect ratio is 5 or more. In particular, the resin particle preferably has a scale-like shape, a maximum diameter of 10 μm or more, and an aspect ratio of 5 or more. In the composite material, the content of the resin particle is preferably 0.1% by mass or more and 30% by mass or less. The resin particle preferably contains a resin having a melting point 10°C or more higher than the melting point of the polyolefin resin which becomes a matrix. The resin particle also preferably contains a resin having a melting point at 170°C or more and/or a resin exhibiting an endothermic peak at 170°C or more and 350°C or less measured by differential scanning calorimetry. This allows the resin particles to remain when the formed body is formed by using the composite material, and thus enables to further improve the strength of the resin composite material. Examples of the resin particle include resin particles containing at least one type of polyethylene terephthalate, polybutylene terephthalate, and polyamide, and among them, polyethylene terephthalate is preferable.

At least a part of the above resin and cellulose fiber constituting the composite material of the present invention can be derived from a recycled material. At least a part of the aluminum, polypropylene, polyethylene terephthalate, and nylon, which can be contained in the composite material of the present invention, can also be derived from a recycled material. The production cost of the composite material can be suppressed by utilizing recycling.

Examples of the recycled material include polyethylene laminated paper having paper and a polyethylene thin film layer, polyethylene laminated paper having paper, a polyethylene thin film layer, and an aluminum thin film layer, and a beverage pack and/or food pack made of these processed papers, or waste paper, and recycled resin. Use of a plurality types of these materials is possible. More preferably, a polyethylene thin film piece to which a cellulose fiber is adhered, obtained by processing the above laminated paper and/or beverage/food pack by a pulper to strip off and remove a paper portion (hereinafter, referred to as "cellulose fiber-adhering polyethylene thin film piece") is used as the recycled material. When the laminated paper and/or the beverage/food pack have an aluminum thin film layer, aluminum is also adhered to the cellulose fiber-adhering polyethylene thin film piece.

When such a recycled material is used as a raw material, the composite material of the present invention can also be obtained by, for example, melt-kneading described later.

In the composite material of the present invention, the moisture content is preferably less than 1% by mass. The moisture content is determined from the weight loss (% by mass) when 10 mg of composite material sample is subjected to a thermogravimetric analysis (TGA) from 23°C to 120°C at a heating rate of +10°C/min under a nitrogen atmosphere within 6 hours after production of the composite material.

The composite material of the present invention may contain at least one type of compound of a metal salt of organic acid, organic acid, and silicone. A composite material containing these compounds improves flowability during heating and prevents forming defects during forming. Preferred examples of the compound include metal salts of fatty acids such as zinc stearate and sodium stearate, and fatty acids such as oleic acid and stearic acid.

The composite material of the present invention may contain an inorganic material. Flexural modulus, impact resistance, and flame retardancy can be improved by containing the inorganic material. Examples of the inorganic material include calcium carbonate, talc, clay, magnesium oxide, aluminum hydroxide, magnesium hydroxide, and titanium oxide.

The composite material of the present invention may contain a flame retardant, an antioxidant, a stabilizer, a weathering agent, a compatibilizer, an impact improver, a modifier, or the like according to the purpose. The composite material of the present invention can contain an oil component or various types of additives for improving processability. Examples thereof include paraffin, modified polyethylene wax, stearate, hydroxy stearate, a vinylidene fluoridebased copolymer such as a vinylidene fluoride-hexafluoropropylene copolymer, and organic modified siloxane.

The composite material of the present invention can also contain carbon black, various pigments and dyes. The composite material of the present invention can contain a metallic luster colorant. The composite material of the present invention can also contain an electrical conductivity-imparting component such as electrically conductive carbon black. Further, the composite material of the present invention can also contain a thermal conductivity-imparting component.

The composite material of the present invention may be crosslinked. Examples of the crosslinking agent include organic peroxide, and specific examples include dicumyl peroxide. The composite material of the present invention may be in a crosslinked form by a silane crosslinking method.

The shape of the composite material of the present invention is not particularly limited. For example, the composite material of the present invention can be in the form of pellets. The composite material of the present invention may also be formed into a desired shape. When the composite material of the present invention is in the form of pellets, this pellet is suitable as a material for forming a formed article (resin product).

The application of the composite material of the present invention is not particularly limited, and the composite material of the present invention can be widely used as various types of components and raw materials thereof.

[Preparation of cellulose fiber-dispersing resin composite material]

Subsequently, preferred embodiments of a method of producing the composite material of the present invention will be described below. The composite material of the present invention is not limited to those obtained by the following method as long as the definitions of the present invention are satisfied.

The composite material of the present invention containing a specific size of cellulose aggregate can be obtained by adjusting the kneading condition when a resin, and a cellulose fiber or other supply sources thereof (hereinafter, also collectively referred to as "cellulose fiber material" which will be described in detail later) are kneaded, or adding an additive during kneading. The composite material of the present invention can be obtained by, for example, adding a polar solvent having high affinity with a cellulose fiber and kneading them upon kneading a thermoplastic resin and a cellulose material. The polar solvent is preferably a solvent having relatively low affinity with a resin constituting the composite material. The polar solvent added during kneading is preferably water.

The amount and size of the aggregate of the cellulose fiber in the obtained composite material can be adjusted by controlling the addition amount of the polar solvent, addition timing, kneading time, kneading speed, temperature, and the like at the time of kneading. When the addition amount of water is large for example, the amount of the aggregate tends to be large and the size of the aggregate tends to be large. In particular, the kneading time in the presence of the polar solvent significantly affects controlling of the amount and size of the aggregate.

It is preferable to perform kneading in the presence of water for a long period of time in order to form the aggregate defined in the present invention. The kneading time in the presence of water can be sufficiently secured by, for example, adding water in several times in the kneading over a long period of time. Specifically, in kneading using a batch type kneader, water is separately added at the beginning and during the kneading, or water is added in several times during the kneading, for example. As another method, in the kneading using a batch type kneader, only a cellulose material and water are first charged into a kneader without adding a resin, the resin is then added after operating the kneader, and the mixture is kneaded, for example. By performing kneading in this manner, many large lumps of the cellulose fiber containing water are first formed. Although these lumps are broken by kneading, the lumps tend to remain as an aggregate. Such a kneading method is also considered to provide an effect of substantially prolong the kneading time in the presence of water due to the lumps containing water compared to the case of simply kneading by adding water.

The amount and size of the aggregate of the cellulose fiber formed by this kneading tend not to significantly vary in the kneading in the absence of water. Accordingly, the kneading condition in the presence of water becomes important, and the obtained composite material can maintain the aggregated state of the cellulose in subsequent processing, blending (diluting) with a resin, and the like, and thus can exhibit desired characteristics such as impact strength.

The above kneading is preferably melt-kneading, and typical kneading devices such as a kneader and a twin screw extruder can be applied to the kneading.

Here, "melt-kneading" means kneading at a temperature at which the resin (thermoplastic resin) in the raw material is melted. The melt-kneading is preferably performed at a temperature and treatment time at which the cellulose fiber is not deteriorated. The expression "the cellulose fiber is not deteriorated" means that the cellulose fiber does not cause significant discoloration, burning or carbonization.

The temperature in the melt-kneading (temperature of the melt-knead product) is, for example, preferably 110 to 280°C, and more preferably 130 to 220°C when a case of using a polyethylene resin is taken as an example.

In the melt-kneading, the used amount of the cellulose material is preferably adjusted so that the content of the cellulose fiber in the obtained composite material is within the above preferable range.

Examples of the cellulose material include a material mainly containing cellulose, and more specifically, examples thereof include pulp, paper, waste paper, paper powder, regenerated pulp, paper sludge, laminated paper, and broken paper of laminated paper.

The paper and waste paper may contain a cellulose fiber, a filler (kaolin or talc, for example) generally contained in order to enhance the whiteness of the paper, a sizing agent, and the like. Here, the sizing agent is an additive to be added for the purpose of suppressing permeability of liquid such as ink into the paper, preventing set-off or blurring, and providing the paper with a certain degree of water proofness. As a main agent, rosin soap, alkylketene dimer, alkenyl succinic anhydride, polyvinyl alcohol, and the like are used. As a surface sizing agent, oxidized starch, a styrene-acryl copolymer, a styrene-methacryl copolymer and the like are used. For example, various types of additives which are contained in paper or waste paper, an ink component, lignin, and the like may be contained.

The laminated paper may contain a polyethylene resin, a cellulose fiber, a filler (kaolin or talc, for example) generally contained in order to enhance the whiteness of the paper, a sizing agent, and the like. Here, the sizing agent is an additive to be added for the purpose of suppressing permeability of liquid such as ink into the paper, preventing set-off or blurring, and providing the paper with a certain degree of water proofness. As a main agent, rosin soap, alkylketene dimer, alkenyl succinic anhydride, polyvinyl alcohol, and the like are used. As a surface sizing agent, oxidized starch, a styrene-acryl copolymer, a styrene-methacryl copolymer and the like are used. For example, various types of additives which are contained in the laminated paper as the raw material, an ink component, and the like may be contained.

The pulp includes mechanical pulps and chemical pulps, and the mechanical pulp contains lignin and contaminants. Meanwhile, the chemical pulp hardly contains lignin, but contains contaminants other than lignin in some cases. For the cellulose amount in the cellulose raw material such as pulp, paper, waste paper, paper powder, regenerated pulp, paper sludge, laminated paper, and broken paper of the laminated paper used in the present invention, there is a difference in appearance due to, for example, influence of contaminants and additives in each material, or influence of undegraded components of cellulose which is out of the measurement temperature range in the thermogravimetric analysis of the cellulose amount. In the present invention, the cellulose fiber amount determined by [Formula 1] in the thermogravimetric analysis was used as the cellulose fiber amount.

[Formed body]

The formed body of the present invention is a formed body formed by using the composite material of the present invention into a desired shape. Examples of the formed body of the present invention include formed bodies of various structures such as a sheet form, a plate form, and a tubular form. Examples of the tubular formed body include a straight tube with a cross section of a substantially cylindrical shape or a square shape, a curved tube, a corrugated tube to which a corrugated shape is imparted. Examples of the tubular formed body also include divided bodies obtained by dividing the tubular formed body such as the straight tube with a cross section of a substantially cylindrical shape or a square shape, the curved tube, the corrugated tube to which a corrugated shape is imparted into two pieces, for example. The formed body of the present invention can also be used as a joint member for the tube as well as members for civil engineering, building materials, automobiles, or protection of electrical cables. The formed body of the present invention can be obtained by subjecting the composite material of the present invention to ordinary forming means such as injection molding, extrusion molding, press molding, and blow molding.

[Composite member]

A composite member can be obtained by combining the formed body of the present invention and another material (component). The form of this composite member is not particularly limited. For example, the composite member can be a composite member having a laminate structure in which a layer composed of the formed body of the present invention and a layer composed of another material are combined. This composite member preferably has a tubular structure. Further, as the other material constituting the composite member in combination with the formed body of the present invention, for example, a thermoplastic resin material, a metal material, and the like can be exemplified.

For example, the composite material of the present invention can be used for being joined to a metal to form a composite. This composite can be a laminate including a layer of the composite material of the present invention and a metal layer. The composite is also preferably a coated metal tube having a coating layer, in which the composite material of the present invention is used in the outer circumference and/or inner circumference of a metal tube. The coated metal tube can be used as, for example, an electromagnetic wave shielding tube. The composite material of the present invention and metal are preferably joined in the form in which both are directly bonded. This joining can be performed by an ordinary method such as thermal fusing and the like. The composite material of the present invention can also be used as an adhesive sheet. For example, in order to bond metal and a polyolefin resin material, the composite material of the present invention can be used as an adhesive resin layer by interposing the composite material between the metal and the polyolefin resin material. Further, the composite material of the present invention can be used as a hot melt adhesive.

The composite member of the present invention can be suitably used as a member for civil engineering, building materials or automobiles, or a raw material for these members.

When the composite material of the present invention is joined to metal to form a composite, the type of the metal is not particularly limited. The metal preferably contains at least one type of aluminum, copper, steel, an aluminum alloy, a copper alloy, stainless steel, a magnesium alloy, a lead alloy, silver, gold, and platinum. Above all, preferably, the metal contains at least one type of aluminum, an aluminum alloy, copper, and a copper alloy, and more preferably, the metal is at least one type of aluminum, an aluminum alloy, copper, and a copper alloy. The metal also preferably contains aluminum and/or an aluminum alloy, and is also preferably aluminum and/or an aluminum alloy.

EXAMPLES

The present invention will be described in more detail based on examples given below, but the invention is not meant to be limited by these. A measurement method and an evaluation method for each indicator in the present invention are as follows.

[Cellulose content in composite material]

A composite material sample (10 mg) which has been dried in advance under the atmosphere at 80°C × 1 hour is subjected to a thermogravimetric analysis (TGA) from 23°C to 400°C under a nitrogen atmosphere at a heating rate of +10°C/min. Then, the content of cellulose fiber (% by mass) was calculated by the following [Formula 1]. The same five composite material samples were prepared, and the thermogravimetric analysis was performed for each of the composite material samples in the same manner as described above. The average value of five calculated values of the contents (% by mass) of the cellulose fibers was obtained, and the average value was taken as the content (% by mass) of the cellulose fiber.

$$[\text{Formula 1}] \ (\text{content of cellulose fiber [\% by mass]}) = (\text{amount of mass reduction}$$
$$\text{of composite material sample at 200 to 380°C [mg]}) \times 100/(\text{mass of composite}$$
$$\text{material sample in dried state before thermogravimetric analysis [mg]})$$

[Aggregate]

<Evaluation-1 of aggregate of cellulose fiber>

A composite material was diluted with a resin to prepare a sheet having a thickness of 0.1 mm. A microscopic image of this sheet was taken with transmitted light, and the size (area) and distribution of a dark color portion (aggregates of the cellulose fiber) were analyzed. The above dilution was performed by kneading a composite material and a resin by a roll. Incidentally, pressing (press pressure: 4.2 MPa) was used for preparing the sheet, and a stereoscopic microscope and analysis software (image analysis software Pixs2000 Pro, manufactured by Inotec) were used for taking the microscopic image and analysis. The above dilution of the composite material with the resin was performed in a manner that the concentration of the cellulose fiber after dilution was in a range of 3 to 7% by mass.

The area in plan view of the aggregate of the cellulose fiber thus analyzed was evaluated based on the following evaluation criteria.

Presence of aggregate 1:

A case where an aggregate having an area of $2.0 \times 10^4$ to $1.0 \times 10^6$ $\mu m^2$ is present is evaluated as "present" and a case where such an aggregate is not present is evaluated as "absent".

Presence of aggregate 1b:

A case where an aggregate having an area of $2.0 \times 10^4$ to $2.0 \times 10^5$ $\mu m^2$ is present is evaluated as "present" and a case where such an aggregate is not present is evaluated as "absent".

Presence of aggregate 1c:

A case where an aggregate having an area of $3.0 \times 10^4$ to $1.3 \times 10^5$ $\mu m^2$ is present is evaluated as "present" and a case where such an aggregate is not present is evaluated as "absent".

Presence of aggregate 1d:

A case where an aggregate having an area of $5.0 \times 10^4$ to $1.0 \times 10^5$ $\mu m^2$ is present is evaluated as "present" and a case where such an aggregate is not present is evaluated as "absent".

<Evaluation-2 of aggregate of cellulose fiber>

The presence of the aggregate having an area of $1.0 \times 10^7$ $\mu m^2$ or more was determined by preparing a test piece (thickness: 4 mm, width: 10 mm, and length: 80 mm) by injection molding, and then observing both surfaces of each of the obtained 10 test pieces.

Presence of aggregate 2:

A case where an aggregate having an area of $1.0 \times 10^7$ $\mu m^2$ or more is present is evaluated as "present" and a case where such an aggregate is not present is evaluated as "absent".

[Melt flow rate (MFR)]

A melt flow rate was measured under conditions: temperature = 230°C, and load = 5 kgf in accordance with JIS K 7210. A unit of MFR is g/10 min.

[Impact resistance (Impact strength)]

A test piece (thickness: 4 mm, width: 10 mm, and length: 80 mm) was prepared by injection molding, and Izod impact strength was measured using a notched test piece in accordance with JIS K 7110. A unit of the impact resistance is $kJ/m^2$.

[Cellulose fiber length]

0.1 to 1 g was cut out from a formed sheet of the composite material, and this was taken as a sample, and this sample was wrapped with a 400-mesh stainless steel mesh, and immersed into 100 mL of xylene at 138°C for 24 hours. Next, the sample was pulled up therefrom, and then the sample was dried in vacuum at 80°C for 24 hours. Then, 0.1 g of the dry sample was sufficiently dispersed into 50 mL of ethanol and added dropwise to a petri dish, and a part in a range of 15 mm × 12 mm was observed with a microscope. A case where a cellulose fiber having a fiber length of 0.3 mm or more is observed and a cellulose fiber having a fiber length of 1 mm or more is not observed was evaluated as (o); a case where a cellulose fiber having a fiber length of 1 mm or more is observed was evaluated as (⊙); and other cases were evaluated as (×).

[Length weighted average fiber length]

The length weighted average fiber length was measured for a hot xylene dissolution residue (insoluble component) of the composite material in accordance with Pulps-Determination of fiber length by automated optical analysis specified by ISO 16065 2001 (JIS P8226 2006). Specifically, 0.1 to 1 g was cut out from a formed sheet of the composite material and this was taken as a sample, and this sample was wrapped with a 400-mesh stainless steel mesh, and immersed into 100 mL of hot xylene at 138°C for 24 hours. Next, the sample was pulled up therefrom, and then the sample was dried in vacuum at 80°C for 24 hours, thus obtaining a hot xylene dissolution residue (insoluble component) of the composite material. The length weighted average fiber length for this hot xylene dissolution residue (insoluble component) of this composite material was determined by using MORFI COMPACT, manufactured by TECHPAP in accordance with Pulps-Determination of fiber length by automated optical analysis.

[Preparation Example 1]

In Preparation Example 1, composite materials were each prepared by using a low density polyethylene as a resin and pulp as a cellulose material. Details will be described as the following Examples 1 and 2, and Comparative Examples 1 and 2.

<Examples 1 and 2>

In Examples 1 and 2, low density polyethylene 1 (NOVATEC LC600A, manufactured by Japan Polyethylene Corporation) and pulp were mixed at the blend ratio shown in the upper rows in Table 1 (unit: parts by mass) and melt-kneaded by using a kneader to obtain a composite material. In the melt-kneading, 20 parts by mass of water was first added, and 20 parts by mass of water was further added during the kneading. The cellulose fiber-dispersing resin composite materials of Examples 1 and 2, which are different in the type of pulp, are thus obtained.

Incidentally, in Examples 1 and 2, and later Examples and Comparative Examples, the moisture content of each of the obtained composite materials was less than 1% by mass.

<Comparative Examples 1 and 2>

Low density polyethylene 1 (NOVATEC LC600A, manufactured by Japan Polyethylene Corporation) and pulp were mixed at the blend ratio shown in the upper rows in Table 1 (unit: parts by mass) and melt-kneaded by using a kneader to obtain a composite material. The cellulose fiber-dispersing resin composite materials of Comparative Examples 1 and 2, which are different in the type of pulp, were thus prepared.

The contents of cellulose fibers in the composite materials are shown in the middle row in Table 1, and the evaluation results and the like are shown in the lower rows in Table 1.

The presence of each of the aggregates 1, 1b, 1c, and 1d was evaluated by using a sheet formed of a material prepared by mixing the obtained composite material and low density polyethylene 1 at a mass ratio of 6 : 44 (composite material: low density polyethylene 1) to dilute the composite material with the resin. Note that the content of the cellulose fiber of the sheet obtained by dilution was 3.6 to 3.8% by mass. A range of 7 mm in length $\times$ 8 mm in width of the sheet was taken as one position, the areas of randomly selected five positions were determined as the observation area.

In the composite materials of Examples 1 to 4, the aggregate of the cellulose fiber having the area defined in the present invention was formed, whereas in the composite materials of Comparative Examples 1 to 4, the aggregate having an area of $2.0 \times 10^4$ to $1.0 \times 10^6$ $\mu m^2$ was not observed. A comparison between Examples 1 to 4 and Comparative Examples 1 to 4 with respect to composite materials containing the same pulp shows that impact strength was high in the composite materials of Examples 1 to 4. For Examples 1 and 2, it is also found that the value of MFR is high and flowability in the forming process is excellent.

[Table 1]

Table 1

|  | Ex. 1 | Ex. 2 | CEx. 1 | CEx. 2 |
|---|---|---|---|---|
| Low density polyethylene 1 (parts by mass) | 60 | 60 | 60 | 60 |
| Pulp 1 (parts by mass) | 40 |  | 40 |  |
| Pulp 2 (parts by mass) |  | 40 |  | 40 |
| Pulp 3 (parts by mass) |  |  |  |  |
| Pulp 4 (parts by mass) |  |  |  |  |
| Cellulose fiber (% by mass) | 30.4 | 29.9 | 29.6 | 31.9 |
| Impact strength (kJ/m$^2$) | 6.4 | 7.0 | 4.5 | 5.1 |
| MFR (g/10 min) | 2.0 | 1.7 | 1.1 | 0.96 |
| Aggregate 1 | Present | Present | Absent | Absent |
| Aggregate 2 | Absent | Absent | Absent | Absent |
| Aggregate 1b | Present | Present | Absent | Absent |
| Aggregate 1c | Present | Present | Absent | Absent |
| Aggregate 1d | Present | Present | Absent | Absent |
| Pulp 1: VITACEL L500, manufactured by J. RETTENMAIER & SÖHNE<br>Pulp 2: ARBOCEL FIF400, manufactured by J. RETTENMAIER & SÖHNE<br>Pulp 3: ARBOCEL BC200, manufactured by J. RETTENMAIER & SÖHNE<br>Pulp 4: ARBOCEL BE600/30, manufactured by J. RETTENMAIER & SÖHNE (the same applies to the following tables)<br>Remarks: 'Ex.' means Example according to this invention, and<br>'CEx.' means Comparative Example. |  |  |  |  |

[Preparation Example 2]

In Preparation Example 2, composite materials were each prepared by using a low density polyethylene and an ethylene-acrylic acid copolymer as a resin, and pulp as a cellulose material. Details will be described as the following Examples 3 to 6, and Comparative Examples 3 to 6.

<Examples 3 to 6>

In Examples 3 to 6, low density polyethylene 1 (NOVATEC LC600A, manufactured by Japan Polyethylene Corporation), ethylene-acrylic acid copolymer 1 (Nucrel, manufactured by Dupont-Mitsui Polychemicals Co., Ltd), and pulp were mixed at the blend ratio shown in the upper rows in Table 2 and melt-kneaded by using a kneader to obtain a composite material. In the melt-kneading, 20 parts by mass of water was first added, and 20 parts by mass of water was further added during the kneading. The cellulose fiber-dispersing resin composite materials of Examples 3 to 6, in which are different in the type of pulp, were thus obtained.

<Comparative Examples 3 to 6>

Low density polyethylene 1 (NOVATEC LC600A, manufactured by Japan Polyethylene Corporation), ethylene-acrylic acid copolymer 1 (Nucrel, manufactured by Dupont-Mitsui Polychemicals Co., Ltd), and pulp were mixed at the blend ratio shown in the upper rows in Table 2 and melt-kneaded by using a kneader to obtain a composite material. The cellulose fiber-dispersing resin composite materials of Comparative Examples 3 to 6, which are different in the type of pulp, were thus prepared.

The contents of cellulose fibers in the composite materials are shown in the middle row in Table 2, and the evaluation results and the like are shown in the lower rows in Table 2.

The presence of each of the aggregates 1, 1b, 1c, and 1d was evaluated by using a sheet formed of a material prepared by mixing the obtained composite material and low density polyethylene 1 at a mass ratio of 6 : 44 (composite material : low density polyethylene 1) to dilute the composite material with the resin. Note that the content of the cellulose fiber of the sheet obtained by dilution was 3.5 to 4.2% by mass. A range of 7 mm in length $\times$ 8 mm in width of the sheet was taken as one position, the areas of randomly selected five positions were determined as the observation area.

The proportion of sum of the areas of the aggregates having an area of $3.0 \times 10^4$ to $1.3 \times 10^5$ $\mu m^2$ (area range r1) in the observation area is taken as s1, and the proportion of the sum of the areas of the aggregates having an area of $1.0 \times 10^3$ to $1.0 \times 10^6$ $\mu m^2$ (area range r2) in the observation area is taken as s2, and s1 and s2 are shown in Table 2. The proportion of s1 in s2 is also shown in Table 2. The area distribution of the aggregate of the composite material of Example 3 is shown in Fig. 1.

In the following table, (s1/s2) $\times$ 100 means the "proportion of the sum of the areas of the aggregates having an area of $3.0 \times 10^4$ to $1.3 \times 10^5$ $\mu m^2$ in the sum of the areas of the aggregates having an area of $1.0 \times 10^3$ to $1.0 \times 10^6$ $\mu m^2$ in a plan view in the aggregate of the cellulose fiber contained in the cellulose fiber-dispersing resin composite material".

In the composite materials of Examples 3 to 6, the aggregate of the cellulose fiber having the area defined in the present invention was formed, whereas in the composite materials of Comparative Examples 3 to 6, the aggregate having an area of $2.0 \times 10^4$ to $1.0 \times 10^6$ $\mu m^2$ was not observed. A comparison between Examples 3 to 6 and Comparative Examples 3 to 6 with respect to the composite materials containing the same pulp shows that the composite materials of Examples 3 to 6 exhibit high impact strength. For Examples 3 and 4, it is also found that the value of MFR is high and flowability in the forming process is excellent.

Also, focusing on the composite materials of Examples 3 to 6 which contain the aggregate having a specific size, it is found that composite materials, in which the proportion of s1 in s2 is large, particularly exhibited high impact strength. Among these examples, Examples 3 to 5, in which the proportion of s1 in s2 is 40% or more, were excellent in impact strength.

Meanwhile, the composite material of Example 6, which is relatively inferior in impact strength, contains a cellulose fiber having a fiber length of 0.3 mm or more, but does not contain a cellulose fiber having a fiber length of 1 mm or more, and the length weighted average fiber length was less than 0.3 mm.

[Table 2]

Table 2

|  | Ex. 3 | Ex. 4 | Ex. 5 | Ex. 6 |
|---|---|---|---|---|
| Low density polyethylene 1 (parts by mass) | 57 | 57 | 57 | 57 |
| Ethylene-acrylic acid copolymer 1 (parts by mass) | 3 | 3 | 3 | 3 |
| Pulp 1 (parts by mass) | 40 | | | |
| Pulp 2 (parts by mass) | | 40 | | |
| Pulp 3 (parts by mass) | | | 40 | |
| Pulp 4 (parts by mass) | | | | 40 |
| Cellulose fiber (% by mass) | 33.3 | 34.9 | 31.6 | 29.3 |
| Impact strength (kJ/m$^2$) | 7.1 | 7.4 | 7.2 | 5.5 |
| MFR (g/10 min) | 1.4 | 1.5 | 2.2 | 8.1 |
| Aggregate 1 | Present | Present | Present | Present |
| Aggregate 2 | Absent | Absent | Absent | Absent |
| s1 (%) | 0.24 | 0.36 | 0.20 | 0.11 |
| s2 (%) | 0.56 | 0.58 | 0.47 | 0.32 |
| (s1/s2) × 100 (%) | 42 | 62 | 43 | 34 |
| Aggregate 1b | Present | Present | Present | Present |
| Aggregate 1c | Present | Present | Present | Present |
| Aggregate 1d | Present | Present | Present | Present |
| Cellulose fiber length | ⊙ | ⊙ | ⊙ | ○ |
| Length weighted average fiber length (µm) | 510 | 619 | 394 | 298 |

Remarks: 'Ex.' means Example according to this invention.

Table 2 (continued)

| | CEx. 3 | CEx. 4 | CEx. 5 | CEx. 6 |
|---|---|---|---|---|
| Low density polyethylene 1 (parts by mass) | 57 | 57 | 57 | 57 |
| Ethylene-acrylic acid copolymer 1 (parts by mass) | 3 | 3 | 3 | 3 |
| Pulp 1 (parts by mass) | 40 | | | |
| Pulp 2 (parts by mass) | | 40 | | |
| Pulp 3 (parts by mass) | | | 40 | |
| Pulp 4 (parts by mass) | | | | 40 |
| Cellulose fiber (% by mass) | 32.9 | 32.8 | 31.2 | 30.6 |
| Impact strength (kJ/m$^2$) | 5.2 | 5.8 | 6.1 | 5.3 |
| MFR (g/10 min) | 0.36 | 0.27 | 2.5 | 8.9 |
| Aggregate 1 | Absent | Absent | Absent | Absent |
| Aggregate 2 | Absent | Absent | Absent | Absent |
| s1 (%) | | | | |
| s2 (%) | | | | |
| (s1/s2) × 100 (%) | | | | |
| Aggregate 1b | Absent | Absent | Absent | Absent |
| Aggregate 1c | Absent | Absent | Absent | Absent |
| Aggregate 1d | Absent | Absent | Absent | Absent |
| Cellulose fiber length | ⊙ | ⊙ | ⊙ | ○ |
| Length weighted average fiber length (μm) | 518 | 563 | 395 | 296 |

Remarks: 'CEx.' means Comparative Example.

[Preparation Example 3]

In Preparation Example 3, composite materials were each prepared by using broken paper of laminated paper in place of the pulp of Preparation Example 1. Details will be described as the following Examples 7 and 8.

<Example 7>

A material obtained by pulverizing broken paper of polyethylene laminated paper (having paper, a polyethylene thin film layer, and an aluminum thin film layer) by using a rotary cutter mill (manufactured by Horai Co., Ltd.) and low density polyethylene 1 (NOVATEC LC600A, manufactured by Japan Polyethylene Corporation) were mixed at the blend ratio shown in the upper rows in Table 3 and melt-kneaded by using a kneader to obtain a composite material. In the melt-kneading, 20 parts by mass of water was first added, and 20 parts by mass of water was further added during the kneading. The cellulose fiber-dispersing resin composite material of Example 7 was thus obtained.

<Example 8>

A material obtained by pulverizing broken paper of polyethylene laminated paper (having paper, a polyethylene thin film layer, and an aluminum thin film layer) by using a rotary cutter mill (manufactured by Horai Co., Ltd.) and low density polyethylene 1 (NOVATEC LC600A, manufactured by Japan Polyethylene Corporation) were mixed at the blend ratio shown in the upper rows in Table 3 and melt-kneaded by using a kneader without adding water to obtain a composite material. The cellulose fiber-dispersing resin composite material of Example 8 was thus obtained.

The contents of cellulose fibers in the composite materials are shown in the middle row in Table 3, and the evaluation results and the like are shown in the lower rows in Table 3.

The presence of each of the aggregates 1, 1b, 1c, and 1d was evaluated by using a sheet formed of a material prepared by mixing the obtained composite material and low density polyethylene 1 at a mass ratio of 8 : 42 (composite material : low density polyethylene 1) to dilute the composite material with the resin. Note that the cellulose fiber amount in the sheet obtained by dilution was 3.1 % by mass. A range of 7 mm in length × 8 mm in width of the sheet was taken as one position, the areas of randomly selected five positions were determined as the observation area.

Incidentally, aluminum derived from broken paper is also observed as a dark color with transmitted light. However, with transmitted light, lightness is higher in the aggregate of the cellulose fiber than aluminum, and therefore the aggregate of the cellulose fiber can be discriminated.

The composite materials of Examples 7 and 8 were both excellent in impact strength. Comparing Examples 7 and 8, impact strength was more excellent in the composite material of Example 7 which does not contain the aggregate 2. Further, in the composite material of Example 8, materials broken by a runner or a sprue tend to remain on the molding machine side during injection molding (formability: Δ), whereas the composite material of Example 7 did not cause such a problem, and was excellent in formability (formability: o).

[Table 3]

Table 3

| | Example 7 | Example 8 |
|---|---|---|
| Low density polyethylene 1 (parts by mass) | 60 | 60 |
| Broken paper of laminate paper (parts by mass) | 40 | 40 |
| Cellulose fiber (% by mass) | 19.4 | 19.5 |
| Impact strength (kJ/m$^2$) | 12.1 | 9.5 |
| MFR (g/10 min) | 2.2 | 2.0 |
| Formability | ○ | △ |
| Aggregate 1 | Present | Present |
| Aggregate 2 | Absent | Present |
| Aggregate 1b | Present | Present |
| Aggregate 1c | Present | Present |
| Aggregate 1d | Present | Present |

[Preparation Example 4]

In Preparation Example 4, composite materials were each prepared by using a high density polyethylene as a resin, adding a small amount of acid-modified resin, and using waste paper as a cellulose material. Details will be described as the following Examples 9 to 17.

<Examples 9 to 17>

High density polyethylene 1 (NOVATEC HJ490, manufactured by Japan Polyethylene Corporation), acid-modified polyethylene 1 (maleic acid-modified polyethylene, FUSABOND, DuPont), and waste paper were mixed at the blend ratio shown in the upper rows in Table 4 and melt-kneaded by using a kneader to obtain a composite material. In the melt-kneading, water in an amount of 1/20 the number of parts by mass of waste paper to be blended was first added, and water in an amount of 1/20 the number of parts by mass of waste paper to be blended was further added during the kneading. The cellulose fiber-dispersing resin composite materials of Examples 9 to 17 were thus obtained.

The contents of cellulose fibers in the composite materials are shown in the middle row in Table 4, and the evaluation results and the like are shown in the lower rows in Table 4.

The presence of each of the aggregates 1, 1b, 1c, and 1d was evaluated by using a sheet formed of a material prepared by mixing the obtained composite material and high density polyethylene 1 at a mass ratio of 20 : 30 (composite material: low density polyethylene 1) in Examples 11, 14, and 17, at a mass ratio of 11 : 39 (composite material: low density polyethylene 1) in Examples 12, 15, and 18, or at a mass ratio of 7 : 43 (composite material: low density polyethylene 1) in Examples 13, 16, and 19 to thereby dilute the composite material with the resin. Note that the cellulose fiber amount in the sheet obtained by dilution was 4.2 to 4.7% by mass. A range of 7 mm in length × 8 mm in width of the sheet was taken as one position, the areas of randomly selected five positions were determined as the observation area.

Also, the proportion of s1 in s2 described above was measured for some examples. The results are shown in Table 4. Examples 9 and 11, in which this proportion is 40% or more, exhibited higher impact strength.

[Table 4]

Table 4

|  | Ex. 9 | Ex. 10 | Ex. 11 | Ex. 12 | Ex. 13 |
|---|---|---|---|---|---|
| High density polyethylene 1 (parts by mass) | 81 | 64 | 46 | 81 | 64 |
| Acid-modified polyethylene resin 1 (parts by mass) | 2 | 3 | 4 | 2 | 3 |
| Waste paper 1 (parts by mass) | 17 | 33 | 50 | | |
| Waste paper 2 (parts by mass) | | | | 17 | 33 |
| Waste paper 3 (parts by mass) | | | | | |
| Cellulose fiber (% by mass) | 10.7 | 21.2 | 33.7 | 10.8 | 21.1 |
| Impact strength (kJ/m$^2$) | 5.2 | 7.0 | 7.4 | 3.6 | 4.7 |
| MFR (g/10 min) | 23 | 4.9 | 0.40 | 32 | 5.6 |
| Aggregate 1 | Present | Present | Present | Present | Present |
| Aggregate 2 | Absent | Absent | Absent | Absent | Absent |
| s1 (%) | 0.037 | | 0.022 | 0.14 | |
| s2 (%) | 0.056 | | 0.037 | 0.43 | |
| (s1/s2) × 100 (%) | 66 | | 59 | 33 | |
| Aggregate 1b | Present | Present | Present | Present | Present |
| Aggregate 1c | Present | Present | Present | Present | Present |
| Aggregate 1d | Present | Present | Present | Present | Present |

Waste paper 1: finely cut material obtained by shredding office paper
Waste paper 2: finely cut material of cardboard
Waste paper 3: pulverized product of newspaper (rotary cutter mill, manufactured by Horai Co., Ltd., mesh diameter: φ15 mm was used)
Remarks: 'Ex.' means Example according to this invention.

Table 4 (continued)

|  | Ex. 14 | Ex. 15 | Ex. 16 | Ex. 17 |
|---|---|---|---|---|
| High density polyethylene 1 (parts by mass) | 46 | 81 | 64 | 46 |
| Acid-modified polyethylene resin 1 (parts by mass) | 4 | 2 | 3 | 4 |
| Waste paper 1 (parts by mass) |  |  |  |  |
| Waste paper 2 (parts by mass) | 50 |  |  |  |
| Waste paper 3 (parts by mass) |  | 17 | 33 | 50 |
| Cellulose fiber (% by mass) | 32.6 | 10.6 | 20.3 | 31.7 |
| Impact strength (kJ/m$^2$) | 4.5 | 3.6 | 4.6 | 4.6 |
| MFR (g/10 min) | 0.11 | 25 | 4.3 | 0.22 |
| Aggregate 1 | Present | Present | Present | Present |
| Aggregate 2 | Absent | Absent | Absent | Absent |
| s1 (%) | 0.079 | 0.12 |  | 0.060 |
| s2 (%) | 0.22 | 0.48 |  | 0.17 |
| (s1/s2) × 100 (%) | 36 | 25 |  | 34 |
| Aggregate 1b | Present | Present | Present | Present |
| Aggregate 1c | Present | Present | Present | Present |
| Aggregate 1d | Present | Present | Present | Present |

Waste paper 1: finely cut material obtained by shredding office paper
Waste paper 2: finely cut material of cardboard
Waste paper 3: pulverized product of newspaper (rotary cutter mill, manufactured by Horai Co., Ltd., mesh diameter: φ15 mm was used)
Remarks: 'Ex.' means Example according to this invention.

The composite material of Example 11 was sliced to a thickness of 0.1 mm with a microtome to obtain a sheet. A microscopic image of transmission was taken, and the size and distribution of a dark color portion as the aggregate was then analyzed. An actual state microscope and analysis software (image analysis software Pixs2000 Pro, manufactured by Inotec) were used for taking the microscopic image and analysis. In order to prevent irregular reflection, the microscopic image was taken with the sliced composite material sandwiched between glass plates on which oil has been dropped.

In the observation of the sheet obtained by slicing, the presence of all of the aggregates 1, 1b, 1c, and 1d could be confirmed. Further, when the proportion of the sum of the areas of the aggregates having an area of $3.0 \times 10^4$ to $1.3 \times 10^5$ μm$^2$ (area range r1) in the observation area is taken as s1', and the proportion of the sum of the areas of the aggregates having an area of $1.0 \times 10^3$ to $1.0 \times 10^6$ μm$^2$ (area range r2) in the observation area is taken as s2', s1' was 0.13%, and s2' was 0.22%. The proportion of s1' in s2' ($100 \times$ s1'/s2') was 59%.

Further, when sr1 and sr2 which are 5% converted values are calculated based on an assumption that the composite material of Example 11 is diluted so that the cellulose fiber content is 5% by mass, sr1 and sr2 were as follows:

$$sr1 \ [\%] = s1' \ [\%] \times 5 \ [\% \text{ by mass}]/(\text{content of sample cellulose fiber to be observed } [\% \text{ by mass}]) = 0.13\% \times 5/33.7 = 0.019\%$$

$$sr2 = s2' \ [\%] \times 5 \ [\% \text{ by mass}]/(\text{content of sample cellulose fiber to be observed } [\% \text{ by mass}]) = 0.22\% \times 5/33.7 = 0.033\%.$$

[Preparation Example 5]

In Preparation Example 5, the composite materials of the following Examples 18 and 19 were prepared.

<Example 18>

Low density polyethylene 1 (NOVATEC LC600A, manufactured by Japan Polyethylene Corporation), pulp 2 (ACRBOEL FIF400, manufactured by J. RETTENMAIER & SOHNE), and ethylene-acrylic acid copolymer 1 (Nucrel, manufactured by Dupont-Mitsui Polychemicals Co., Ltd) were mixed at the blend ratio shown in the upper rows in Table 5 and melt-kneaded by using a kneader to obtain a composite material. In the melt-kneading, 40 parts by mass of water was added in two portions during the kneading. The cellulose fiber-dispersing resin composite material of Example 18 was thus prepared.

<Example 19>

Low density polyethylene 1 (NOVATEC LC600A, manufactured by Japan Polyethylene Corporation), pulp 2 (ACRBOEL FIF400, manufactured by J. RETTENMAIER & SOHNE), and ethylene-acrylic acid copolymer 1 (Nucrel, manufactured by Dupont-Mitsui Polychemicals Co., Ltd) were mixed at the blend ratio shown in the upper rows in Table 5 and melt-kneaded by using a kneader to obtain a composite material. In the melt-kneading, 4 parts by mass of water was first added, and no water was added thereafter. The cellulose fiber-dispersing resin composite material of Example 19 was thus prepared.

The contents of cellulose fibers in the composite materials are shown in the middle row in Table 5, and the evaluation results and the like are shown in the lower rows in Table 5.

The presence of each of the aggregates 1, 1b, 1c, and 1d was evaluated by using a sheet formed of a material prepared by mixing the obtained composite material and low density polyethylene 1 at a mass ratio of 6 : 44 (composite material: low density polyethylene 1) to dilute the composite material with the resin. Note that the content of the cellulose fiber of the sheet obtained by dilution was 3.8 to 3.9% by mass. A range of 7 mm in length × 8 mm in width of the sheet was taken as one position, the areas of randomly selected five positions were determined as the observation area. Also, the proportion of s1 in s2 described above was measured. The results are shown in Table 5.

The composite materials of Examples 18 and 19 were both excellent in impact strength.

It is found that, among these examples, the composite material of Example 18 which contains the aggregate 1c or aggregate 1d exhibited higher impact strength than the composite material of Example 19 which does not contain these aggregates, also exhibited high MFR, and thus was excellent in flowability in the forming process. Comparing Examples 4, 18, and 19 in which the same pulps are blended, in the composite material of Example 19 obtained by simply adding water at the beginning of the melt-kneading, the aggregate 1c or aggregate 1d was not formed. In the composite material of Example 4 in which water was first added in the melt-kneading and water was further added during the kneading, and the composite material of Example 18 in which water was added twice during the melt-kneading, the aggregate 1c or aggregate 1d was formed. It is found that these composite materials both exhibited higher impact strength than Example 19, also exhibited a high value of MFR, and were excellent in flowability in the forming process. Among these examples, a comparison between Examples 4 and 18 in which the same pulps are blended shows that the composite material of Example 4, in which the proportion of s1 in s2 is high, exhibited even high impact strength and a high value of MFR, and thus was excellent in flowability in the forming process.

[Table 5]

Table 5

|  | Example 18 | Example 19 |
| --- | --- | --- |
| Low density polyethylene 1 (parts by mass) | 57 | 57 |
| Ethylene-acrylic acid copolymer 1 (parts by mass) | 3 | 3 |
| Pulp 2 (parts by mass) | 40 | 40 |
| Cellulose fiber (% by mass) | 33.1 | 33.4 |
| Impact strength (kJ/m$^2$) | 6.8 | 6.2 |
| MFR (g/10 min) | 0.93 | 0.44 |
| Aggregate 1 | Present | Present |
| Aggregate 2 | Absent | Absent |

(continued)

|  | Example 18 | Example 19 |
|---|---|---|
| s1 (%) | 0.086 | |
| s2 (%) | 0.48 | |
| (s1/s2) × 100 (%) | 18 | |
| Aggregate 1b | Present | Present |
| Aggregate 1c | Present | Absent |
| Aggregate 1d | Present | Absent |

[Preparation Example 6]

In Preparation Example 6, the composite materials of the following Examples 20 to 22 and Comparative Example 7 were prepared.

<Example 20>

Low density polyethylene 1 (NOVATEC LC600A, manufactured by Japan Polyethylene Corporation), pulp 1 (VITACEL L500, manufactured by J. RETTENMAIER & SOHNE), and ethylene-acrylic acid copolymer 1 (Nucrel, manufactured by Dupont-Mitsui Polychemicals Co., Ltd) were mixed at the blend ratio shown in the upper rows in Table 6 and melt-kneaded by using a kneader to obtain a composite material. Water was added as follows in the melt-kneading.

The total amount of water added was 40 parts by mass. Pulp 1 and water were first charged into a kneader, and the kneader was operated for a while. Then, a low density polyethylene and an ethylene-acrylic acid copolymer were supplied to the kneader, and the materials were melt-kneaded by operating the kneader, thus obtaining a composite material. This composite material was further kneaded by a roll, and the cellulose fiber-dispersing resin composite material of Example 20 was thus prepared.

<Comparative Example 7>

Low density polyethylene 1 (NOVATEC LC600A, manufactured by Japan Polyethylene Corporation), pulp 1 (VITACEL L500, manufactured by J. RETTENMAIER & SOHNE), and ethylene-acrylic acid copolymer 1 (Nucrel, manufactured by Dupont-Mitsui Polychemicals Co., Ltd) were mixed at the blend ratio shown in the upper rows in Table 6 and melt-kneaded by using a kneader to obtain a composite material. This composite material was further kneaded by a roll, and the cellulose fiber-dispersing resin composite material of Comparative Example 7 was thus prepared.

<Examples 21 and 22>

A composite material (composite material A) was obtained in the same manner as in Example 20. Further, a composite material (composite material B) was obtained in the same manner as in Comparative Example 7. The obtained composite materials A and B were kneaded at a mass ratio of A : B = 25 : 15 by a roll to prepare the cellulose fiber-dispersing resin composite material of Example 21. Further, the composite materials A and B were kneaded at a mass ratio of A : B = 15 : 25 by a roll to prepare the cellulose fiber-dispersing resin composite material of Example 22.

<Comparative Example 8>

Low density polyethylene 1 (NOVATEC LC600A, manufactured by Japan Polyethylene Corporation), pulp 5 (powder cellulose, KC Flock, manufactured by Nippon Paper Industries Co., Ltd.), and ethylene-acrylic acid copolymer 1 (Nucrel, manufactured by Dupont-Mitsui Polychemicals Co., Ltd) were mixed at the blend ratio shown in the upper rows in Table 6 and melt-kneaded by using a kneader to obtain a composite material. In the melt-kneading, 40 parts by mass of water was added from the beginning. The cellulose fiber-dispersing resin composite material of Comparative Example 8 was thus prepared.

<Comparative Example 9>

Low density polyethylene 1 (NOVATEC LC600A, manufactured by Japan Polyethylene Corporation), pulp 5 (powder cellulose, KC Flock, manufactured by Nippon Paper Industries Co., Ltd.), and ethylene-acrylic acid copolymer 1 (Nucrel, manufactured by Dupont-Mitsui Polychemicals Co., Ltd) were mixed at the blend ratio shown in the upper rows in Table 6 and melt-kneaded by using a twin screw extruder to obtain a composite material. In Comparative Example 9, 20 parts by mass of water was added from the beginning of the melt-kneading. The cellulose fiber-dispersing resin composite material of Comparative Example 9 was thus obtained.

<Example 23>

Low density polyethylene 1 (NOVATEC LC600A, manufactured by Japan Polyethylene Corporation), pulp 1 (VITACEL L500, manufactured by J. RETTENMAIER & SOHNE), and ethylene-acrylic acid copolymer 1 (Nucrel, manufactured by Dupont-Mitsui Polychemicals Co., Ltd) were mixed at the blend ratio shown in the upper rows in Table 6 and melt-kneaded by using a twin screw extruder to obtain a composite material. 20 parts by mass of water was added from the beginning of the melt-kneading. The cellulose fiber-dispersing resin composite material was thus obtained.
The contents of cellulose fibers in the composite materials are shown in the middle row in Table 6, and the evaluation results and the like are shown in the lower rows in Table 6.
The presence of each of the aggregates 1, 1b, 1c, and 1d was evaluated by using a sheet formed of a material prepared by mixing the obtained composite material and low density polyethylene 1 at a mass ratio of 6 : 44 (composite material: low density polyethylene 1) to dilute the composite material with the resin. Note that the content of the cellulose fiber of the sheet obtained by dilution was 3.8 to 3.9% by mass. A range of 7 mm in length $\times$ 8 mm in width of the sheet was taken as one position, the areas of randomly selected five positions were determined as the observation area. The proportion of s1 in s2 is also shown in Table 6.
Table 6 shows that, in the composite materials of Examples 20 to 23 which contain the aggregate having a specific size, impact strength is improved. The composite material of Comparative Example 7, which does not contain the aggregate having a specific size, exhibited low impact strength. Further, the composite materials of Comparative Examples 8 and 9, which do not contain the aggregate having a specific size and in which the pulps are blended in the same amounts, exhibited low impact strength although they contain a low density polyethylene as a base material.
Also, a comparison between Example 3 and Examples 20 to 23 in which the pulps are blended in the same amounts shows that the composite materials of Example 3 and Examples 20 to 22 which contain the aggregate 1c or aggregate 1d were excellent in impact strength compared to Example 23 which does not contain these aggregates.

[Table 6]

Table 6

| | Ex. 20 | CEx. 7 | Ex. 21 | Ex. 22 |
|---|---|---|---|---|
| Low density polyethylene 1 (parts by mass) | 57 | 57 | 57 | 57 |
| Ethylene-acrylic acid copolymer 1 (parts by mass) | 3 | 3 | 3 | 3 |
| Pulp 1 (parts by mass) | 40 | 40 | 40 | 40 |
| Pulp 5 (parts by mass) | | | | |
| Cellulose fiber (parts by mass) | 32.0 | 32.1 | 32.3 | 31.5 |
| Impact strength (kJ/m$^2$) | 7.0 | 5.3 | 6.4 | 6.0 |
| MFR (g/10 min) | 2.4 | 1.9 | 2.0 | 1.7 |
| Aggregate 1 | Present | Absent | Present | Present |
| Aggregate 2 | Absent | Absent | Absent | Absent |
| s1 (%) | 0.44 | - | 0.28 | 0.16 |
| s2 (%) | 0.96 | - | 0.61 | 0.36 |
| (s1/s2) × 100 (%) | 46 | - | 46 | 45 |
| Aggregate 1b | Present | Absent | Present | Present |
| Aggregate 1c | Present | Absent | Present | Present |
| Aggregate 1d | Present | Absent | Present | Present |
| Cellulose fiber length | ⊙ | ⊙ | ⊙ | ⊙ |

Remarks: 'Ex.' means Example according to this invention, and 'CEx.' means Comparative Example.

Table 6 (continued)

| | CEx. 8 | CEx. 9 | Ex. 23 |
|---|---|---|---|
| Low density polyethylene 1 (parts by mass) | 57 | 57 | 57 |
| Ethylene-acrylic acid copolymer 1 (parts by mass) | 3 | 3 | 3 |
| Pulp 1 (parts by mass) | | | 40 |
| Pulp 5 (parts by mass) | 40 | 40 | |
| Cellulose fiber (parts by mass) | 31.4 | 31.2 | 31.6 |
| Impact strength (kJ/m$^2$) | 4.3 | 4.2 | 5.7 |
| MFR (g/10 min) | 9.3 | 9.6 | 1.2 |
| Aggregate 1 | Absent | Absent | Present |
| Aggregate 2 | Absent | Absent | Absent |
| s1 (%) | - | - | - |
| s2 (%) | - | - | - |
| (s1/s2) × 100 (%) | - | - | - |
| Aggregate 1b | Absent | Absent | Present |
| Aggregate 1c | Absent | Absent | Absent |
| Aggregate 1d | Absent | Absent | Absent |
| Cellulose fiber length | × | × | ○ |

Remarks: 'Ex.' means Example according to this invention, and 'CEx.' means Comparative Example.

The composite material of Example 20 was sliced to a thickness of 0.1 mm with a microtome to obtain a sheet. A microscopic image of transmission was taken, and then the size and distribution of a dark color portion as the aggregate was analyzed. An actual state microscope and analysis software (image analysis software Pixs2000 Pro, manufactured by Inotec) were used for taking the microscopic image and analysis. In order to prevent irregular reflection, the microscopic image was taken with the sliced composite material sandwiched between glass plates on which oil has been dropped.

In the observation of the sheet obtained by slicing, the presence of all of the aggregates 1, 1b, 1c, and 1d could be confirmed. Further, when the proportion of the sum of the areas of the aggregates having an area of $3.0 \times 10^4$ to $1.3 \times 10^5$ $\mu m^2$ (area range r1) in the observation area is taken as s1', and the proportion of the sum of the areas of the aggregates having an area of $1.0 \times 10^3$ to $1.0 \times 10^6$ $\mu m^2$ (area range r2) in the observation area is taken as s2', s1' was 2.2%, and s2' was 4.8%. The proportion of s1' in s2' ($100 \times$ s1'/s2') was 46%.

Further, when sr1 and sr2 which are 5% converted values are calculated based on an assumption that the composite material of Example 20 is diluted so that the cellulose fiber content is 5% by mass, sr1 and sr2 were as follows:

$$sr1\ [\%] = s1'\ [\%] \times 5\ [\%\ by\ mass]/(content\ of\ sample\ cellulose\ fiber\ to\ be\ observed\ [\%\ by\ mass]) = 2.2\% \times 5/32 = 0.34\%$$

$$sr2 = s2'\ [\%] \times 5\ [\%\ by\ mass]/(content\ of\ sample\ cellulose\ fiber\ to\ be\ observed\ [\%\ by\ mass]) = 4.8\% \times 5/32 = 0.75\%.$$

[Preparation Example 7]

In Preparation Example 7, composite materials were each prepared by using broken paper of laminated paper. Details will be described as the following examples.

<Example 24>

A material obtained by pulverizing broken paper of polyethylene laminated paper (having paper, a polyethylene thin film layer, and an aluminum thin film layer) by using a rotary cutter mill (manufactured by Horai Co., Ltd.), low density polyethylene 1 (NOVATEC LC600A, manufactured by Japan Polyethylene Corporation), and stearic acid were mixed at the blend ratio shown in the upper rows in Table 7 and melt-kneaded by using a kneader to obtain a composite material. In the melt-kneading, 20 parts by mass of water was first added, and 20 parts by mass of water was further added during the kneading. The cellulose fiber-dispersing resin composite material of Example 24 was thus obtained.

<Example 25>

A material obtained by pulverizing broken paper of polyethylene laminated paper (having paper, a polyethylene thin film layer, and an aluminum thin film layer) by using a rotary cutter mill (manufactured by Horai Co., Ltd.) and low density polyethylene 1 (NOVATEC LC600A, manufactured by Japan Polyethylene Corporation) were mixed at the blend ratio shown in the upper rows in Table 7 and melt-kneaded by using a kneader to obtain a composite material. In the melt-kneading, 20 parts by mass of water was first added, and 20 parts by mass of water was further added during the kneading. After completion of water addition, stearic acid was further added. The cellulose fiber-dispersing resin composite material of Example 25 was thus obtained.

The contents of cellulose fibers in the composite materials are shown in the middle row in Table 7, and the evaluation results and the like are shown in the lower rows in Table 7.

The presence of each of the aggregates 1, 1b, 1c, and 1d was evaluated by using a sheet formed of a material prepared by mixing the obtained composite material and low density polyethylene 1 at a mass ratio of 8 : 42 (composite material: low density polyethylene 1) to dilute the composite material with the resin. Note that the cellulose fiber amount in the sheet obtained by dilution was 3.1% by mass. A range of 7 mm in length $\times$ 8 mm in width of the sheet was taken as one position, the areas of randomly selected five positions were determined as the observation area.

Incidentally, aluminum derived from broken paper is also observed as a dark color with transmitted light. However, with transmitted light, lightness is higher in the aggregate of the cellulose fiber than aluminum, and therefore the aggregate of the cellulose fiber can be discriminated.

The composite materials of Examples 24 and 25 both had sufficient impact strength. These composite materials also exhibited high MFR and excellent flowability compared to the composite material of Example 7. Moreover, in the composite material of Example 7, the phenomenon that materials broken by a runner or a sprue remain on the molding machine side during injection molding was improved (formability: ○), but the composite materials of Examples 24 and 25 did not cause such a problem more than the composite material of Example 7, and was particularly excellent in formability (formability: ⊙).

[Table 7]

Table 7

| | Example 24 | Example 25 | Example 7 |
|---|---|---|---|
| Low density polyethylene 1 (parts by mass) | 60 | 60 | 60 |
| Broken paper of laminate paper (parts by mass) | 40 | 40 | 40 |
| Stearic acid | 1 | 1 | |
| Cellulose fiber (parts by mass) | 19.4 | 19.2 | 19.4 |
| Impact strength (kJ/m$^2$) | 8.9 | 8.3 | 12.1 |
| MFR (g/10 min) | 6.4 | 9.6 | 2.2 |
| Formability | ⊙ | ⊙ | ○ |
| Aggregate 1 | Present | Present | Present |
| Aggregate 2 | Absent | Absent | Absent |
| Aggregate 1b | Present | Present | Present |
| Aggregate 1c | Present | Present | Present |
| Aggregate 1d | Present | Present | Present |

<Examples 26 to 31 >

Cellulose fiber-dispersing resin composite materials were each obtained in the same manner as in Example 25 except that the compounds shown in Table 8 were used in place of the stearic acid of Example 25. Details of the used compounds are as follows. Silicone 1: pellets containing 50% silicone, PE (polyethylene) wax 1: Tm (melting point) = 92 to 126°C, oxidized PE wax 1: Tm = 88 to 140°C, fluororesin 1: Viton FF10.

The composite materials of Examples 26 to 31 all exhibited a high impact strength of 6 kJ/m$^2$ or more and high MFR as shown in Table 8. Among these examples, the composite materials of Examples 26 to 28, in which zinc stearate, oleic acid, or silicone was added, exhibited particularly high MFR.

[Table 8]

Table 8

| | Ex. 26 | Ex. 27 | Ex. 28 |
|---|---|---|---|
| Low density polyethylene 1 (parts by mass) | 60 | 60 | 60 |
| Broken paper of laminate paper (parts by mass) | 40 | 40 | 40 |
| Zinc stearate (parts by mass) | 1 | | |
| Oleic acid (parts by mass) | | 1 | |
| Silicone 1(parts by mass) | | | 2 |
| PE wax 1 (parts by mass) | | | |
| Oxidized PE wax 1 (parts by mass) | | | |
| Fluororesin 1 (parts by mass) | | | |
| MFR (g/10 min) | 6.6 | 6.2 | 5.6 |
| Aggregate 1 | Present | Present | Present |
| Aggregate 2 | Absent | Absent | Absent |
| Aggregate 1b | Present | Present | Present |
| Aggregate 1c | Present | Present | Present |
| Aggregate 1d | Present | Present | Present |

Remarks: 'Ex.' means Example according to this invention.

Table 8 (continued)

| | Ex. 29 | Ex. 30 | Ex. 31 |
|---|---|---|---|
| Low density polyethylene 1 (parts by mass) | 60 | 60 | 60 |
| Broken paper of laminate paper (parts by mass) | 40 | 40 | 40 |
| Zinc stearate (parts by mass) | | | |
| Oleic acid (parts by mass) | | | |
| Silicone 1(parts by mass) | | | |
| PE wax 1 (parts by mass) | 1 | | |
| Oxidized PE wax 1 (parts by mass) | | 1 | |
| Fluororesin 1 (parts by mass) | | | 1 |
| MFR (g/10 min) | 3.4 | 3.6 | 3.2 |
| Aggregate 1 | Present | Present | Present |
| Aggregate 2 | Absent | Absent | Absent |
| Aggregate 1b | Present | Present | Present |
| Aggregate 1c | Present | Present | Present |
| Aggregate 1d | Present | Present | Present |

Remarks: 'Ex.' means Example according to this invention.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2018-228579 filed in Japan on December 5, 2018, which is entirely herein incorporated by reference.

**Claims**

1. A cellulose fiber-dispersing resin composite material, comprising a cellulose fiber dispersed in a resin,

   wherein the cellulose fiber-dispersing resin composite material comprises aggregates of the cellulose fiber; and

wherein at least a part of the aggregates is an aggregate having an area of $2.0 \times 10^4$ to $1.0 \times 10^6$ $\mu m^2$ in a plan view.

2. The cellulose fiber-dispersing resin composite material according to claim 1, wherein at least a part of the aggregates of the cellulose fiber contained in the cellulose fiber-dispersing resin composite material is an aggregate having an area of $2.0 \times 10^4$ to $2.0 \times 10^5$ $\mu m^2$ in a plan view.

3. The cellulose fiber-dispersing resin composite material according to claim 2, wherein at least a part of the aggregates of the cellulose fiber contained in the cellulose fiber-dispersing resin composite material is an aggregate having an area of $3.0 \times 10^4$ to $1.3 \times 10^5$ $\mu m^2$ in a plan view.

4. The cellulose fiber-dispersing resin composite material according to any one of claims 1 to 3, wherein the aggregates of the cellulose fiber contained in the cellulose fiber-dispersing resin composite material are aggregates having an area of less than $1.0 \times 10^7$ $\mu m^2$ in a plan view.

5. The cellulose fiber-dispersing resin composite material according to any one of claims 1 to 4, wherein a content of the cellulose fiber in the cellulose fiber-dispersing resin composite material determined by the following measurement method is 1% by mass or more and less than 70% by mass:
<measurement method>
a sample of the cellulose fiber-dispersing resin composite material is subjected to a thermogravimetric analysis (TGA) under a nitrogen atmosphere at a heating rate of +10°C/min, and the content of the cellulose fiber is calculated by the following [Formula 1]:

$$[\text{Formula 1}]\ (\text{content of cellulose fiber [\% by mass]}) = (\text{amount of mass reduction}$$
$$\text{of sample at 200 to 380°C [mg]}) \times 100/(\text{mass of sample before thermogravimetric}$$
$$\text{analysis [mg]}).$$

6. The cellulose fiber-dispersing resin composite material according to claim 5, wherein the content of the cellulose fiber in the cellulose fiber-dispersing resin composite material is 5% by mass or more and less than 50% by mass.

7. The cellulose fiber-dispersing resin composite material according to any one of claims 1 to 6, comprising a cellulose fiber having a fiber length of 0.3 mm or more.

8. The cellulose fiber-dispersing resin composite material according to claim 7, comprising a cellulose fiber having a fiber length of 1 mm or more.

9. The cellulose fiber-dispersing resin composite material according to any one of claims 1 to 8, wherein a length weighted average fiber length of the cellulose fiber is 0.3 mm or more.

10. The cellulose fiber-dispersing resin composite material according to any one of claims 1 to 9, wherein, in the aggregates of the cellulose fiber contained in the cellulose fiber-dispersing resin composite material, a proportion of a sum of an area of aggregates having an area of $3.0 \times 10^4$ to $1.3 \times 10^5$ $\mu m^2$ in a plan view in a sum of an area of aggregates having an area of $1.0 \times 10^3$ to $1.0 \times 10^6$ $\mu m^2$ is 10 to 95%.

11. The cellulose fiber-dispersing resin composite material according to any one of claims 1 to 10, wherein, in the aggregates of the cellulose fiber contained in the cellulose fiber-dispersing resin composite material, a proportion of a sum of an area of aggregates having an area of $3.0 \times 10^4$ to $1.3 \times 10^5$ $\mu m^2$ in a plan view in a sum of an area of aggregates having an area of $1.0 \times 10^3$ to $1.0 \times 10^6$ $\mu m^2$ is 40 to 80%.

12. The cellulose fiber-dispersing resin composite material according to any one of claims 1 to 11, wherein the resin comprises one type or two or more types of polyolefin resin, acrylonitrile-butadiene-styrene copolymer resin, acrylonitrile-styrene copolymer resin, polyamide resin, polyvinyl chloride resin, polyethylene terephthalate resin, polybutylene terephthalate resin, polystyrene resin, 3-hydroxybutyrate-co-3-hydroxyhexanoate polymer resin, polybutylene succinate resin, and polylactic acid resin.

13. The cellulose fiber-dispersing resin composite material according to any one of claims 1 to 12, wherein the resin comprises a polyolefin resin.

14. The cellulose fiber-dispersing resin composite material according to any one of claims 1 to 13, comprising aluminum dispersed in the resin.

15. The cellulose fiber-dispersing resin composite material according to any one of claims 1 to 14, comprising at least one type of compound of a metal salt of organic acid, organic acid, and silicone.

16. The cellulose fiber-dispersing resin composite material according to any one of claims 1 to 15, wherein at least a part of the resin and/or at least a part of the cellulose fiber is derived from a recycled material.

17. A formed body, which is obtainable by using the cellulose fiber-dispersing resin composite material according to any one of claims 1 to 16.

18. The formed body according to claim 17, which is a tubular body or a divided body formed by dividing a tubular body.

19. A composite member, which is obtainable by combining the formed body according to claim 17 or 18, and another material.

Fig. 1

## INTERNATIONAL SEARCH REPORT

| | International application No. |
|---|---|
| | PCT/JP2019/047437 |

**A. CLASSIFICATION OF SUBJECT MATTER**
B29B 17/00(2006.01)i; C08K 7/02(2006.01)i; C08L 101/00(2006.01)i
FI: C08L101/00; C08K7/02; B29B17/00 ZAB

According to International Patent Classification (IPC) or to both national classification and IPC

**B. FIELDS SEARCHED**

Minimum documentation searched (classification system followed by classification symbols)
B29B17/00; C08K7/02; C08L101/00

Documentation searched other than minimum documentation to the extent that such documents are included in the fields searched
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-193959 A (OJI HOLDINGS CORPORATION) 09.10.2014 (2014-10-09) examples | 1-9, 17 |
| A | entire text all drawings | 10-16, 18, 19 |
| X | JP 2015-209439 A (OJI HOLDINGS CORPORATION) 24.11.2015 (2015-11-24) paragraph [0011], examples | 1-13, 15, 17 |
| A | entire text | 14, 16, 18, 19 |
| X | WO 2017/170745 A1 (FURUKAWA ELECTRIC CO., LTD.) 05.10.2017 (2017-10-05) examples | 1-6, 10-13, 17 |
| A | entire text | 7-9, 14-16, 18, 19 |
| X | WO 2018/180469 A1 (FURUKAWA ELECTRIC CO., LTD.) 04.10.2018 (2018-10-04) examples | 1-6, 10-13, 17 |
| A | entire text all drawings | 7-9, 14-16, 18, 19 |
| A | JP 2007-260941 A (HOKUETSU PAPER MILLS, LTD.) 11.10.2007 (2007-10-11) entire text | 1-19 |

☒ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 February 2020 (10.02.2020) | 25 February 2020 (25.02.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/047437 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2015-143336 A (KAO CORP.) 06.08.2015 (2015-08-06) entire text | 1-19 |
| P, A | JP 2019-014811 A (MITSUI CHEMICALS, INC.) 31.01.2019 (2019-01-31) entire text | 1-19 |
| P, A | JP 2019-043978 A (ASAHI KASEI CORPORATION) 22.03.2019 (2019-03-22) entire text | 1-19 |

Form PCT/ISA/210 (continuation of second sheet) (January 2015)

**INTERNATIONAL SEARCH REPORT**
Information on patent family members

International application No.

PCT/JP2019/047437

| Patent Documents referred in the Report | Publication Date | Patent Family | Publication Date |
|---|---|---|---|
| JP 2014-193959 A | 09 Oct. 2014 | (Family: none) | |
| JP 2015-209439 A | 24 Nov. 2015 | (Family: none) | |
| WO 2017/170745 A1 | 05 Oct. 2017 | US 2019/0031858 A1 examples EP 3438207 A1 CN 108884328 A | |
| WO 2018/180469 A1 | 04 Oct. 2018 | CN 110248993 A | |
| JP 2007-260941 A | 11 Oct. 2007 | (Family: none) | |
| JP 2015-143336 A | 06 Aug. 2015 | US 2016/0319467 A1 entire text EP 3088422 A1 CN 105073784 A TW 201533063 A KR 10-2016-0097281 A | |
| JP 2019-014811 A | 31 Jan. 2019 | (Family: none) | |
| JP 2019-043978 A | 22 Mar. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014193959 A
- JP 2015209439 A
- WO 2017170745 A
- WO 2018180469 A
- JP 2018228579 A